# EUROPÄISCHE PATENTANMELDUNG

(11) **EP 3 081 069 A1**
(43) Veröffentlichungstag der Anmeldung: **19.10.2016**
(21) Anmeldenummer: 16162535.5
(22) Anmeldetag: 29.03.2016
(51) Int. Cl.: A01D 41/12, B60P 1/42, B65D 88/68

(54) **FÖRDEREINRICHTUNG ZUR VERMEIDUNG VON BRÜCKENBILDUNG BEIM ENTLADEN VON ERNTEGUT AUS EINEM KORNTANK EINES MÄHDRESCHERS**

(30) Priorität: 14.04.2015 DE 102015206648
(71) Anmelder: Deere & Company, Moline, IL 61265 (US)
(72) Erfinder: Beck, Folker, 66509 Rieschweiler (DE); Breitsch, Philip, 76891 Busenberg (DE)
(74) Vertreter: Holst, Sönke

(57) **Zusammenfassung**

Eine Fördereinrichtung (72) dient zur Vermeidung von Brückenbildung beim Entladen insbesondere von feinkörnigem Erntegut, wie Saatgut, aus einem Korntank (50) eines Mähdreschers (10). Am Boden (62) des Korntanks (50) ist ein Entladeschneckenförderer (54) angeordnet. Die Fördereinrichtung (72) umfasst eine frei drehbar auf einer Achse (76) anbringbare Nabe (80) mit an der Nabe (80) angebrachten Flügeln (74), die derart abgemessen sind, dass zum Antrieb der Fördereinrichtung (72) jeweils alternierend wenigstens ein Flügel (74) zwischen benachbarten Windungen (82) des Entladeschneckenförderers (54) eingreift.

## Beschreibung

Die Erfindung betrifft eine Fördereinrichtung zur Vermeidung von Brückenbildung beim Entladen insbesondere von feinkörnigem Erntegut, wie Saatgut, aus einem Korntank eines Mähdreschers, wobei am Boden des Korntanks ein Entladeschneckenförderer angeordnet ist, dem die Fördereinrichtung benachbart positionierbar ist.

### Stand der Technik

Landwirtschaftliche Mähdrescher sind große Maschinen, die landwirtschaftlich angebautes Erntegut, das Körner trägt, ernten, dreschen, trennen und reinigen. Das erhaltene saubere Erntegut wird in einem am Mähdrescher angeordneten Korntank gespeichert und bei Erreichen eines hinreichenden Füllstands mittels eines Entladeförderers daraus entnommen und auf ein Transportfahrzeug überladen. Der Entladeförderer umfasst üblicherweise einen oder mehrere am Boden des trichterförmigen Korntanks angeordnete(n) Schneckenförderer, an dessen stromab liegenden Ende ein Abtankrohr mit einem weiteren Schneckenförderer folgt.

Das Zuführen des Ernteguts zum Entladeförderer beruht demnach einzig und allein auf der Schwerkraft. Hier entstehen bei relativ grobkörnigem Erntegut, wie Mais oder Weizen, das in einem hohen Reinheitsgrad im Korntank vorliegt, in der Regel keine größeren Probleme. Wenn andererseits Erntegut mit sehr kleinen Körnern, wie beispielsweise Saatgut für Gras, geerntet werden soll, ergibt sich vielfach ein hoher Grad an Verunreinigungen im Korntank, beispielsweise durch Grashalme. Diese Verunreinigungen führen zu der gefürchteten, so genannten Brückenbildung, bei der sich das Erntegut oberhalb des Schneckenförderers an den Wänden des Korntanks abstützt. Das dem Schneckenförderer unmittelbar benachbarte Material wird zwar abgefördert, nicht aber das darüber und daneben liegende Material. Die verbleibenden Brücken müssen dann manuell entfernt werden, wozu der Bediener des Mähdreschers seinen Arbeitsplatz verlassen und zum Korntank aufsteigen muss.

Es wurden verschiedene Vorrichtungen vorgeschlagen, um entstandene Brücken aufzulösen. Die DD 134 908 A1 schlägt vor, einen Kratzerförderer oberhalb des bodenseitigen Entladeschneckenförderers mit einer horizontal und quer zur Förderrichtung des Entladeschneckenförderers gerichteten Förderrichtung anzubringen. In der DD 284 150 B5 wird vorgeschlagen, eine oberhalb des Entladeschneckenförderers angebrachte Abdeckung durch einen Aktor anzuheben und an den Seitenwänden der Abdeckung schwenkbare Zinkenstangen anzubringen, die mit einer Führungsstange gekoppelt sind. Beim Anheben der Abdeckung bewegen sich somit auch die Zinkenstangen gegenüber der Abdeckung. Die DE 38 40 826 A1 beschreibt einen Korntank mit einer darin in Abhängigkeit vom Füllstand bewegbaren Fördereinrichtung, die beim Befüllen das Erntegut im Korntank verteilen und beim Entladen eine Vergleichmäßigung der Zufuhr des Ernteguts zum Entladeschneckenförderer bewirken und die Brückenbildung vermeiden soll.

Der Antrieb der beweglichen Abdeckung innerhalb des Korntanks erfolgt gemäß der DD 284 150 B5 durch einen Hydraulikzylinder. Die DE 38 40 826 A1 schlägt vor, die Fördereinrichtung hydraulisch oder durch einen mechanischen Antriebsstrang anzutreiben. Gemäß der DD 134 908 A1 wird der Antrieb des Kratzerförderers von der Antriebswelle des Entladeschneckenförderers her über Ketten, Keilriemen oder Zahnräder abgeleitet. Es sind somit jeweils zusätzliche Antriebsmittel vorgesehen, welche die Fördereinrichtung relativ aufwändig gestalten.

### Aufgabe

Die der Erfindung zu Grunde liegende Aufgabe wird darin gesehen, eine Vorrichtung zur Vermeidung von Brückenbildung in einem Korntank bereitzustellen, die sich durch einen einfachen Antrieb auszeichnet.

### Erfindung

Die vorliegende Erfindung wird durch die Patentansprüche definiert.

Eine Fördereinrichtung dient zur Vermeidung von Brückenbildung beim Entladen insbesondere von feinkörnigem Erntegut, wie Saatgut, aus einem Korntank eines Mähdreschers, an dessen Boden ein Entladeschneckenförderer angeordnet ist, dem die Fördereinrichtung benachbart positionierbar ist. Die Fördereinrichtung umfasst eine frei drehbar auf einer Achse anbringbare Nabe mit an der Nabe angebrachten Flügeln, die derart abgemessen sind, dass jeweils alternierend wenigstens ein Flügel zwischen benachbarten Windungen des Entladeschneckenförderers eingreifen kann und die im Korntank angebrachte Fördereinrichtung durch die sich im Entladebetrieb drehenden Windungen des Entladeschneckenförderers um die Achse in Bewegung versetzbar ist.

Man nutzt den Entladeschneckenförderer mit anderen Worten als Antriebsschnecke für die Fördereinrichtung, welche die Brückenbildung des Korntankinhalts verhindern soll. Die einzelnen Flügel der Fördereinrichtung greifen nacheinander jeweils zwischen zwei Windungen des Entladeschneckenförderers ein. Auf diese Weise erhält man einen relativ einfachen Antrieb der Fördereinrichtung, der sich immer dann in Bewegung setzt, wenn der Entladeschneckenförderer im Betrieb ist. Zusätzliche, aufwändige Antriebselemente für die Fördereinrichtung, wie Ketten, Zahnräder, Keilriemen, Hydraulikzylinder oder-motore oder dgl., die im Fehlerfall zudem das Erntegut verunreinigen könnten, erübrigen sich.

Die Drehachsen des Entladeschneckenförderers und der Fördereinrichtung stehen vorzugsweise orthogonal oder in einem stumpfen Winkel zueinander.

Die Achse wird vorzugsweise am Boden des Korntanks angebracht, obwohl sie auch an einem separaten Halter befestigt werden könnte, der an einer Seitenwand oder einer anderen geeigneten Stelle des Korntanks befestigt wird. Die Achse kann permanent oder abnehmbar im Korntank angebracht werden. Sind zwei Entladeschneckenförderer vorhanden, kann jedem vom ihnen eine Fördereinrichtung zugeordnet werden, die sich dann insbesondere an unterschiedlichen Böden oder Wänden des Korntanks befinden.

Der Boden des Korntanks, an dem die Achse angebracht ist, nach ist insbesondere oben hin geneigt. Die Achse kann sich orthogonal zum Boden erstrecken.

Die Fördereinrichtung kann zur verbesserten Auflockerung des Korntankinhalts einen oder mehrere zusätzliche Mitnehmer aufweisen, der oder die die sich axial, radial oder einem anderen Winkel zur Nabe erstreckt oder erstrecken und an der Nabe und/oder einem oder mehreren der Flügel angebracht ist oder sind.

Die Fördereinrichtung wird nur dann benötigt, wenn relativ feinkörniges Erntegut eingebracht wird. Bei der Ernte von nicht brückenbildungsgefährdetem Erntegut (großen Körnern) ist es somit sinnvoll, sie abzubauen, wozu die Nabe von der Achse abnehmbar sein kann. Sie kann durch einen federnden Sicherungsstift an der Achse befestigt werden.

Um eine eventuelle Überlastung des Entladeschneckenförderers oder seines Antriebs bei ungünstigen Betriebsbedingungen zu vermeiden, können die Flügel federnd an der Nabe befestigt sein. Sollte die Fördereinrichtung in einem derartigen Fall schwergängig sein, würde der Flügel dann über die Windungen des Entladeschneckenförderers springen, ohne dass eine Beschädigung des Entladeschneckenförderers, dessen Antriebs oder der Fördereinrichtung zu befürchten wäre.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung heranzuziehen sind. Es zeigt:
- Fig. 1: eine schematische seitliche Ansicht eines Mähdreschers mit einem Korntank und einer darin angeordneten Fördereinrichtung, und
- Fig. 2: eine perspektivische Ansicht des Korntanks der Figur 1 von hinten.

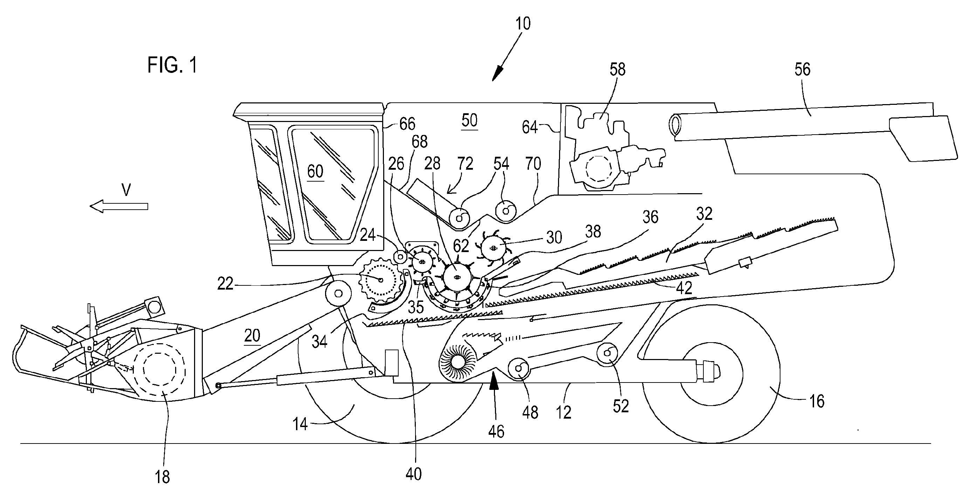

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 mit oder ohne verstellbare(n) Fingerelementen befindet. Unterhalb der Wendetrommel 30 ist ein Fingerrechen 38 angeordnet, der auch entfallen könnte.

Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit quer angeordneten Entladeschneckenförderern 54 und einem Abtankrohr 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden, oder durch einen Axialdresch- und -trennrotor.

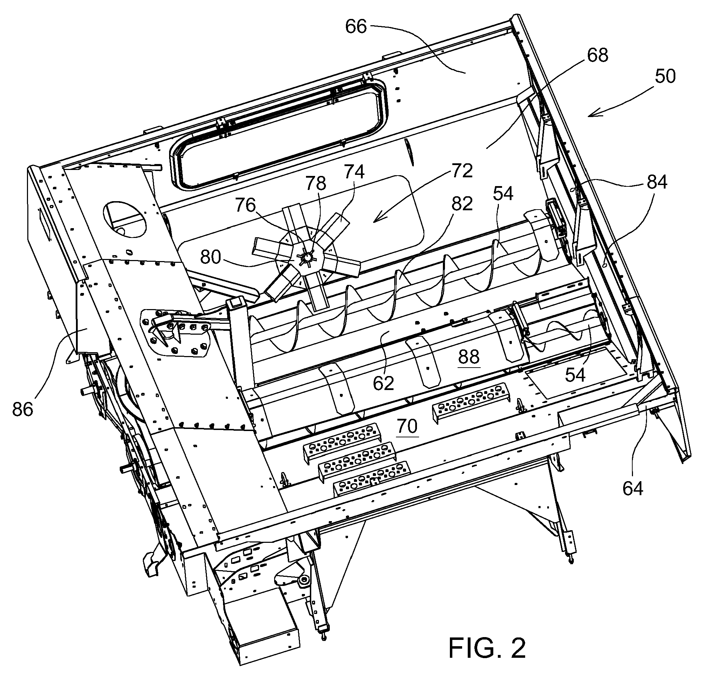

Der Korntank 50 ist in der Figur 2 in einer perspektivischen Darstellung gezeigt. Der Korntank 50 umfasst einen unteren Boden 62, in dem konkave Bereiche ausgeformt sind, in denen die Entladeschneckenförderer 54 positioniert sind. Der untere Boden 62 geht nach vorn und hinten in trichterförmig zur Mitte des Korntanks 50 und nach unten geneigte Böden 68 und 70 über, an die sich wiederum eine vertikale vordere Wand 66 und eine vertikale hintere Wand 64 anschließen. Die seitlichen Wände 84, 86 erstrecken sich im Wesentlichen vertikal. Oberhalb der Entladeschneckenförderer 54 kann eine Abdeckung 88 angebracht sein.

Unmittelbar oberhalb des vorderen Bodens 68 ist eine Fördereinrichtung 72 angeordnet, die zur Vermeidung von Brückenbildung im Korntank 50 dient. Die Fördereinrichtung 72 umfasst eine mittige Nabe 80, an der in der dargestellten Ausführungsform sechs Flügel 74 angebracht sind, die sich radial von der Nabe 80 nach außen erstrecken. Die Flügel 74 weisen ein etwa U-förmiges Profil auf, dessen Öffnung dem Boden 68 zugewandt ist. Die Nabe 80 ist durch einen radialen, federnden Sicherungsstift 78 an einer mittigen Achse 76 befestigt (d.h. in eine radiale Bohrung der Achse 76 eingesteckt), die ihrerseits fest am Boden 68 angebracht ist und sich orthogonal zur Ebene des Bodens 68 und auch orthogonal zur Längsachse des benachbarten Entladeschneckenförderers 54 erstreckt. Jeweils ein Flügel 74 greift zwischen zwei benachbarten Windungen 82 des benachbarten Entladeschneckenförderers 54 ein.

Wenn sich somit im Entladebetrieb der Entladeschneckenförderer 54 dreht, angetrieben vom Verbrennungsmotor 58 über einen Antriebsstrang (vgl. EP 0 291 336 B1), um den Inhalt des Korntanks 50 dem Abtankrohr 56 zuzuführen, wird sich auch die Fördereinrichtung 72 drehen, da ihre Flügel 74 direkt durch die Windungen 82 des Entladeschneckenförderers 54 angetrieben werden und sich die Nabe 80 dann um die Achse 76 dreht. Eventuelle Brücken, die sich insbesondere beim Entladen insbesondere von feinkörnigem Erntegut, wie Saatgut, in dem ggf. auch noch Verunreinigungen enthalten sein können, zwischen den Böden 68 und 70 und ggf. den Wänden 64, 66 bilden können, werden durch die Fördereinrichtung 72 aufgebrochen, sodass auch bei problematischem Erntegut ein vollständiges Entladen des Korntanks 50 ohne manuelles Eingreifen möglich wird. Die Abdeckung 88 wird bei der Ernte derartigem Ernteguts vorzugsweise entfernt.

Falls die Fördereinrichtung 72 nicht benötigt werden sollte, z.B. bei der Ernte von bezüglich der Brückenbildung unproblematischem Erntegut wie Weizen oder Mais, kann die Fördereinrichtung 72 abgebaut werden, indem der Sicherungsstift 78 abgezogen und dann die Nabe 80 von der Achse 76 abgenommen wird.

Anzumerken ist, dass man bei Bedarf auch eine oder mehrere, weitere Fördereinrichtungen 72 im Korntank 50 anbringen könnte. So könnte eine zweite (und ggf. eine dritte) Fördereinrichtung (nicht gezeigt) mit dem in Figur 1 hinten eingezeichneten Entladeschneckenförderer 54 zusammenwirken und parallel zum Boden 70 angeordnet sein. Es können auch zwei oder mehr Fördereinrichtungen 72 mit dem in Figur 1 vorn eingezeichneten Entladeschneckenförderer 54 zusammenwirken, d.h. über seine axiale Länge verteilt sein.

## Patentansprüche

1. Fördereinrichtung (72) zur Vermeidung von Brückenbildung beim Entladen insbesondere von feinkörnigem Erntegut, wie Saatgut, aus einem Korntank (50) eines Mähdreschers (10), wobei am Boden (62) des Korntanks (50) ein Entladeschneckenförderer (54) angeordnet ist, dem die Fördereinrichtung (72) benachbart positionierbar ist, **dadurch gekennzeichnet, dass** die Fördereinrichtung (72) eine frei drehbar auf einer Achse (76) anbringbare Nabe (80) mit an der Nabe (80) angebrachten Flügeln (74) umfasst, die derart abgemessen sind, dass jeweils alternierend wenigstens ein Flügel (74) zwischen benachbarten Windungen (82) des Entladeschneckenförderers (54) eingreifen kann und die im Korntank (50) angebrachte Fördereinrichtung (72) durch die sich im Entladebetrieb drehenden Windungen des Entladeschneckenförderers (54) um die Achse (76) in Bewegung versetzbar ist.

2. Fördereinrichtung (72) nach Anspruch 1, wobei die Achse (76) orthogonal zur Achse des Entladeschneckenförderers (54) angeordnet ist.

3. Fördereinrichtung (72) nach Anspruch 1 oder 2, wobei die Achse (76) am Boden (68) des Korntanks (50) angebracht ist.

4. Fördereinrichtung (72) nach Anspruch 3, wobei der Boden (68), an dem die Achse (76) angebracht ist, nach oben hin geneigt ist.

5. Fördereinrichtung (72) nach Anspruch 3 oder 4, wobei die Achse (76) sich orthogonal zum Boden (68) erstreckt.

6. Fördereinrichtung (72) nach einem der Ansprüche 1 bis 5, die einen oder mehrere zusätzliche Mitnehmer aufweist, der oder die sich axial, radial oder einem anderen Winkel zur Nabe (80) erstreckt oder erstrecken und der oder die an der Nabe (80) und/oder einem oder mehreren der Flügel (74) angebracht ist oder sind.

7. Fördereinrichtung (72) nach einem der Ansprüche 1 bis 6, wobei die Nabe (80) von der am Korntank (50) befestigten Achse (76) abnehmbar ist.

8. Fördereinrichtung (72) nach Anspruch 7, wobei die Nabe (80) durch einen federnden Sicherungsstift (78) an der Achse (76) befestigt ist.

9. Fördereinrichtung (72) nach einem der vorhergehenden Ansprüche, wobei die Flügel (74) starr oder federnd an der Nabe (80) befestigt sind.

10. Mähdrescher (10) mit einem Korntank (50) und einer darin angeordneten Fördereinrichtung (72) nach einem der Ansprüche 1 bis 9.
